# EUROPEAN PATENT APPLICATION

(11) **EP 4 835 012 A1**
(43) Date of publication of application: **04.11.2026**
(21) Application number: 24912898.4
(22) Date of filing: 25.12.2024
(51) Int. Cl.: C09C 3/12, C09C 1/28, C09C 1/36

(54) **GLITTER PIGMENT AND METHOD FOR PRODUCING GLITTER PIGMENT**

(30) Priority: 27.12.2023 JP 2023220299
(71) Applicant: NIPPON SHEET GLASS COMPANY, LIMITED, Tokyo 108-6321 (JP); DIC Corporation, Tokyo 174-8520 (JP)
(72) Inventor: HIOKI, Masahiro, Tokyo 108-6321 (JP); MIKAMI, Shinji, Tokyo 108-6321 (JP); HORIGUCHI, Haruko, Tokyo 108-6321 (JP); KUWANA, Yasuhiro, Kamisu-shi, Ibaraki 314-0193 (JP); HOSAKA, Masaki, Tokyo 103-8233 (JP); MORIMITSU, Taro, Kamisu-shi, Ibaraki 314-0193 (JP); TSUCHIDA, Kenta, Tokyo 103-8233 (JP)
(74) Representative: Cabinet Beau de Loménie
(86) International application number: PCT/JP2024/045875
(87) International publication number: WO 2025/143012

(57) **Abstract**

Provided is a glitter pigment improved in pigment detachment-suppressing effect. The glitter pigment includes: a glitter substrate; a first layer covering at least a portion of a surface of the glitter substrate and containing a silane coupling agent; and a pigment composite adhering to a surface of the first layer, the pigment composite containing an organic pigment and a resin coated on at least a portion of a surface of the organic pigment. A method of producing a glitter pigment, the method comprises: treating a surface of a glitter substrate with a first surface treatment agent containing a silane coupling agent to form a first layer containing the silane coupling agent on at least a portion of the surface; and preparing an aqueous dispersion containing a pigment composite, which contains an organic pigment and a resin coated on at least a portion of a surface of the organic pigment, and the glitter substrate having formed thereon the first layer, followed by adhesion of the pigment composite to a surface of the first layer.

## Description

### TECHNICAL FIELD

The present invention relates to a glitter pigment and a method of producing a glitter pigment.

### BACKGROUND ART

A glitter pigment obtained by coating flaky particles, such as glass flakes or mica pieces, with a metal, and metal powder such as aluminum have heretofore been known as glitter pigments. For example, glitter pigment(s) in which flaky particles, such as mica pieces, synthetic mica pieces, silica flakes, alumina flakes, glass flakes, or graphite flakes, are each covered with a coating layer containing a metal oxide, such as titanium dioxide or iron oxide, and iron oxide particles each containing an α-iron oxide crystal as a main component have been known as glitter pigments each having pearlescent luster. For example, those glitter pigments are each used by itself alone in a cosmetic, ink, a paint composition, or the like, or used as a filler for imparting glitter to a resin composition.

In Patent Literature 1, there is a disclosure of a colored glitter pigment characterized in that the surface of scaly glass is covered with a silica-based coating containing an organic pigment. In Patent Literature 1, the detachment of the organic pigment is suppressed, and improvements in transparency and glitter of the glitter pigment, and an improvement in chroma thereof are achieved by covering the surface of the scaly glass with the silica-based coating containing the organic pigment.

### CITATION LIST

### Patent Literature

Patent Literature 1: JP 2006-176742 A

### SUMMARY OF INVENTION

### Technical Problem

The glitter pigment of Patent Literature 1 can provide excellent transparency and excellent glitter, and clear colors. However, an investigation made by the inventors of the present invention has found that the glitter pigment is susceptible to improvement in terms of suppression of the detachment of the organic pigment. For example, when the glitter pigment of Patent Literature 1 is stirred with a paint for a long time, the organic pigment detaches from the surface of the scaly glass, and hence desired effects on glitter, a chroma, or the like are not obtained in some cases.

An object of the present invention is to provide a glitter pigment improved in pigment detachment-suppressing effect. Another object of the present invention is to provide a method of producing a glitter pigment improved in pigment detachment-suppressing effect.

### Solution to Problem

According to one aspect of the present invention, there is provided a glitter pigment, including: a glitter substrate; a first layer covering at least a portion of a surface of the glitter substrate and containing a silane coupling agent; and a pigment composite adhering to a surface of the first layer, the pigment composite containing an organic pigment and a resin coated on at least a portion of a surface of the organic pigment.

According to another aspect of the present invention, there is provided a method of producing a glitter pigment, the method including: treating a surface of a glitter substrate with a first surface treatment agent containing a silane coupling agent to form a first layer containing the silane coupling agent on the surface; and preparing an aqueous dispersion containing a pigment composite, which contains an organic pigment and a resin coated on at least a portion of a surface of the organic pigment, and the glitter substrate having formed thereon the first layer, followed by adhesion of the pigment composite to a surface of the first layer.

### Advantageous Effects of Invention

According to the present invention, the glitter pigment improved in pigment detachment-suppressing effect is provided.

### BRIEF DESCRIPTION OF DRAWINGS

FIG. 1A is a cross-sectional view for schematically illustrating an example of a glitter pigment in an embodiment of the present invention.
FIG. 1B is a partially enlarged view of FIG. 1A.
FIG. 2 is a schematic view for describing an example of an apparatus for producing glass flakes.
FIG. 3 is a schematic view for describing another example of the apparatus for producing glass flakes.

### DESCRIPTION OF EMBODIMENTS

A glitter pigment according to a first aspect of the present invention includes: a glitter substrate; a first layer covering at least a portion of the surface of the glitter substrate and containing a silane coupling agent; and a pigment composite adhering to the surface of the first layer, the pigment composite containing an organic pigment and a resin coated on at least a portion of the surface of the organic pigment.

In a second aspect of the present invention, for example, the glitter pigment according to the first aspect further includes a second layer containing silica as a main component, and the second layer covers at least a portion of the surface of the pigment composite.

In a third aspect of the present invention, for example, in the glitter pigment according to the second aspect, the second layer covers at least a portion of the surface of the first layer.

In a fourth aspect of the present invention, for example, in the glitter pigment according to any one of the first to third aspects, the glitter substrate includes a flaky substrate and an optical functional layer formed on at least a portion of the surface of the flaky substrate, and the optical functional layer has at least one function selected from the group consisting of: light reflection; and coloring.

In a fifth aspect of the present invention, for example, in the glitter pigment according to the fourth aspect, the optical functional layer contains titanium oxide.

A method of producing a glitter pigment according to a sixth aspect of the present invention includes: treating the surface of a glitter substrate with a first surface treatment agent containing a silane coupling agent to form a first layer containing the silane coupling agent on at least a portion of the surface; and preparing an aqueous dispersion containing a pigment composite, which contains an organic pigment and a resin coated on at least a portion of the surface of the organic pigment, and the glitter substrate having formed thereon the first layer, followed by the adhesion of the pigment composite to the surface of the first layer.

In a seventh aspect of the present invention, for example, in the method of producing a glitter pigment according to the sixth aspect, the aqueous dispersion further contains a second surface treatment agent containing a hydrolyzable compound containing a silicon atom or a hydrolyzate of the compound, and the method includes causing the pigment composite to adhere to the surface of the first layer, and forming a second layer containing silica as a main component on at least a portion of the surface of the pigment composite, or on at least a portion of the surface of the pigment composite and at least a portion of the surface of the first layer.

Embodiments of the present invention are described below with reference to the accompanying drawings. The following description is merely illustrative of the present invention, and the present invention is not limited to the following embodiments.

### [Glitter Pigment]

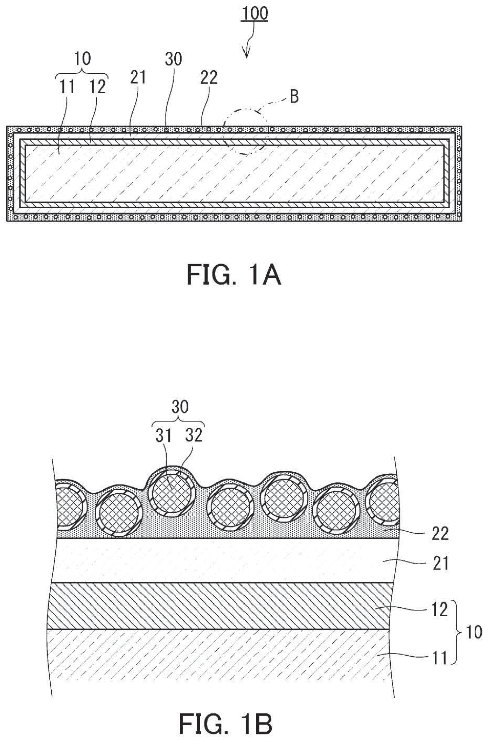

FIG. 1A is a cross-sectional view for schematically illustrating an example of a glitter pigment 100 in this embodiment. FIG. 1B is a partially enlarged view of the portion B of FIG. 1A.

As illustrated in FIG. 1A, the glitter pigment 100 includes a glitter substrate 10, a first layer 21 covering at least a portion of the surface of the glitter substrate 10, and a pigment composite 30 adhering to the surface of the first layer 21. The first layer 21 is a layer containing a silane coupling agent. As illustrated in FIG. 1B, the pigment composite 30 contains an organic pigment 31 and a resin 32 coated on at least a portion of the surface of the organic pigment 31. The pigment composite 30 is a composite in which at least a portion of the surface of the organic pigment 31 is coated with the resin 32.

In the glitter pigment 100 in this embodiment, the surface of the glitter substrate 10 is covered with the first layer 21 containing the silane coupling agent, and the surface of the organic pigment 31 is coated with the resin 32. When the surface of the organic pigment 31 is coated with the resin 32, the pigment composite 30 is less likely to agglomerate, and hence the pigment composite 30 tends to be uniformly present near the surface of the first layer 21. In addition, the pigment composite 30 tends to adhere to the glitter substrate 10 because of an interaction between the resin 32 and the first layer 21. As a result, the organic pigment 31 is less likely to detach from the glitter substrate 10, and hence the detachment of the organic pigment 31 is suppressed. Accordingly, according to the glitter pigment 100 in this embodiment, colors each having excellent transparency and excellent glitter, and a high chroma are stably provided.

As illustrated in FIG. 1A and FIG. 1B, the glitter pigment 100 may further include a second layer 22 containing silica as a main component. The second layer 22 covers at least a portion of the surface of the pigment composite 30. The term "main component" as used herein means a component incorporated in the largest amount in terms of mass ratio into the second layer 22. The same applies to other materials.

In the glitter pigment 100 in this embodiment, the second layer 22 containing silica as a main component tends to be formed on the surface of the pigment composite 30 because the surface of the organic pigment 31 is coated with the resin 32. The second layer 22 contributes to an improvement in adhesion between the glitter substrate 10 and the pigment composite 30. As a result, the organic pigment 31 is even less likely to detach from the glitter substrate 10, and hence the detachment of the organic pigment 31 is further suppressed.

As illustrated in FIG. 1A and FIG. 1B, the second layer 22 may cover at least a portion of the surface of the first layer 21. The pigment composite 30 may be included in the second layer 22.

In the glitter pigment 100 in this embodiment, the pigment composite 30 tends to be uniformly present near the surface of the first layer 21, and the pigment composite 30 tends to adhere to the glitter substrate 10 because of the interaction between the resin 32 and the first layer 21. Accordingly, the ratio of the organic pigment 31 protruding from the second layer 22 reduces. As a result, the organic pigment 31 is still less likely to detach from the glitter substrate 10, and hence the detachment of the organic pigment 31 is still further suppressed.

The glitter substrate 10 may include a flaky substrate 11 and an optical functional layer 12 formed on at least a portion of the surface of the flaky substrate 11. The optical functional layer 12 has at least one function selected from the group consisting of: light reflection; and coloring.

When the glitter substrate 10 has the flaky substrate 11 and the optical functional layer 12 formed on at least a portion of the surface of the flaky substrate 11, at least one function selected from the group consisting of: light reflection; and coloring can be imparted to the glitter pigment 100. The light reflection function is, for example, an increase in visible light reflectance by the addition of the optical functional layer 12. The coloring function is, for example, the development of an interference color by a light interference effect in which the optical functional layer 12 is involved.

### (Flaky Substrate)

Examples of the flaky substrate 11 include glass flakes, mica pieces, synthetic mica pieces, silica flakes, alumina flakes, and graphite flakes. The flaky substrate 11 may be glass flakes.

When the flaky substrate 11 is glass flakes, the composition of generally known glass may be used as the composition of the glass flakes. However, when the optical functional layer 12 is formed on at least a portion of the surface of each of the glass flakes, the composition of the glass flakes is preferably a composition having excellent acid resistance, and for example, C-glass or the like may be suitably used. A typical composition of the C-glass is shown below. The following compositions are expressed in units of mass%.

65 ≤ SiO₂ ≤ 72,
1 ≤ Al₂O₃ ≤ 7,
4 ≤ CaO ≤ 11,
0 ≤ MgO ≤ 5,
9 ≤ (Na₂O+K₂O) ≤ 17,
0 ≤ B₂O₃ ≤ 8, and
0 ≤ ZnO ≤ 6.

In addition, when the glass flakes are combined with a resin that is susceptible to alkali components, a glass composition having excellent acid resistance and a low alkali content is preferred. In this case, there may be used a glass composition expressed in mass%, the composition containing the following components and being substantially free of B₂O₃, F, ZnO, BaO, SrO, and ZrO₂.

59 ≤ SiO₂ ≤ 65,
8 ≤ Al₂O₃ ≤ 15,
47 ≤ (SiO₂ - Al₂O₃) ≤ 57,
1 ≤ MgO ≤ 5,
20 ≤ CaO ≤ 30,
0 < (Li₂O + Na₂O + K₂O) < 2, and
0 ≤ TiO₂ ≤ 5.

The glass composition is disclosed in WO 2006/068255 A1 by one of the present applicants. Glass having the glass composition is hereinafter referred to as "TA glass." The phrase "substantially free" means that there is no intentional incorporation except for inevitable introduction from, for example, industrial raw materials. Specifically, the phrase "substantially free" means that the contents of B₂O₃, F, ZnO, BaO, SrO, and ZrO₂ are each less than 0.1 mass%, preferably less than 0.05 mass%, more preferably less than 0.03 mass%.

The composition of the glass flakes is not limited to the glass compositions of the C-glass and the TA glass described above. For example, glass compositions of A-glass, E-glass, ECR-glass, and S-glass may also be used.

The glass flakes may be produced, for example, by a so-called blowing process disclosed in JP S41(1966)-17148 B and JP S45(1970)-3541 B or a so-called rotary process disclosed in JP S59(1984)-21533 A and JP H2(1990)-503669 A.

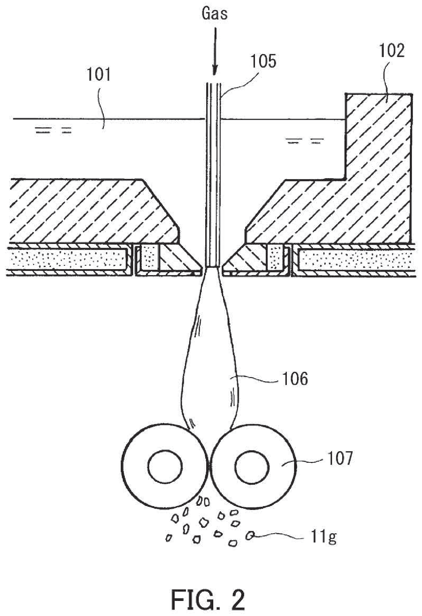

In the blowing process, the glass production apparatus illustrated in FIG. 2 may be used. The glass production apparatus illustrated in FIG. 2 includes a refractory tank furnace 102, a blowing nozzle 105, and pressure rolls 107. A glass material 101 melted in the refractory tank furnace 102 (melting tank) is inflated into a balloon shape by a gas supplied to the blowing nozzle 105, and a hollow glass film 106 is thus formed. The hollow glass film 106 is pulverized by the pressure rolls 107 to provide glass flakes 11g. The thicknesses of the glass flakes 11g may be controlled by adjusting the drawing speed of the hollow glass film 106, the flow rate of the gas supplied through the blowing nozzle 105, and the like.

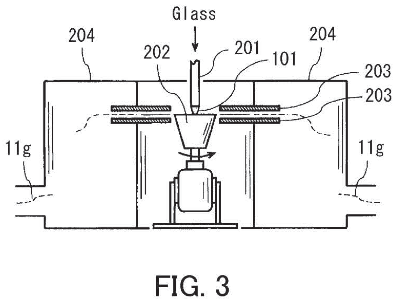

In the rotary process, the glass production apparatus illustrated in FIG. 3 may be used. The glass production apparatus illustrated in FIG. 3 includes a pipe 201, a rotary cup 202, a pair of annular plates 203, and an annular cyclone collector 204. The molten glass material 101 is poured into the rotary cup 202 through the pipe 201, flows out radially from the upper edge of the rotary cup 202 by centrifugal force, is drawn by airflow to pass through a gap between the annular plates 203, and is thus introduced into the annular cyclone collector 204. While passing through the gap between the annular plates 203, the glass is cooled and solidified into a thin film, and further fragmented into fine pieces. Thus, the glass flakes 11g are obtained. The thicknesses of the glass flakes 11g may be controlled by adjusting a distance between the annular plates 203, the velocity of the airflow, and the like.

The average thickness of the flaky substrate 11 may be in the range of from 0.1 µm to 10 µm. The average thickness may be in the range of from 0.5 µm to 1.5 µm. In this description, the average thickness of the flaky substrate 11 may be determined, for example, by measuring the thickness of the flaky substrate 11 contained in each of 100 glitter pigment 100 using a scanning electron microscope (SEM) and averaging the measured values.

The average particle size of the flaky substrate 11 may be in the range of from 0.1 µm to 2,000 µm. The average particle size may be 1.0 µm or more, 10 µm or more, and further 100 µm or more, for example, in the range of from 100 µm to 300 µm. The average particle size may be 200 µm or less. In this description, the average particle size of the flaky substrate 11 is a particle size (D50) corresponding to a cumulative volume of 50% from smaller particle sizes in the particle size distribution of the flaky substrate 11 measured on the basis of a laser diffraction/scattering method.

### (Optical Functional Layer)

In the glitter substrate 10, the optical functional layer 12 covers at least a portion of the surface of the flaky substrate 11. The optical functional layer 12 may cover the entire surface of the flaky substrate 11.

The optical functional layer 12 may be a single-layer structure or a multi-layer structure.

The optical functional layer 12 is, for example, a metal oxide layer containing titanium oxide or iron oxide, or a metal layer of silver, copper, or aluminum. The glitter pigment 100 having pearlescent luster may be obtained by covering the flaky substrate 11 with the metal oxide layer. The glitter pigment 100 having metallic luster may be obtained by covering the flaky substrate 11 with the metal layer.

The optical functional layer 12 may contain titanium oxide. When the optical functional layer 12 contains titanium oxide, pearlescent luster can be imparted to the glitter pigment 100.

In the glitter pigment 100, the optical functional layer 12 covers at least a portion of the surface of the flaky substrate 11. Thus, the glitter pigment 100 may have pearlescent luster or metallic luster. The optical functional layer 12 may cover the entire surface of the flaky substrate 11.

The average thickness of the optical functional layer 12 is not particularly limited. The average thickness of the optical functional layer 12 is preferably in the range of, for example, from 0.01 µm to 0.3 µm, and is more preferably in the range of from 0.01 µm to 0.2 µm in consideration of an improvement in pearlescent luster or metallic luster, production cost, and the like. The average thickness of the optical functional layer 12 may be determined by the same method as the method of determining the average thickness of the flaky substrate 11 described above.

When the optical functional layer 12 contains titanium oxide, the glitter substrate 10 develops a color tone corresponding to the thickness of the optical functional layer 12 because of light interference by the optical functional layer 12. The optical functional layer 12 containing titanium oxide, the layer being formed on the surface of the flaky substrate 11, exhibits, for example, a yellow color at an average thickness of about 100 nm, a red color at an average thickness of about 130 nm, a blue color at an average thickness of about 160 nm, and a green color at an average thickness of about 175 nm. However, even when the thickness of the optical functional layer 12 containing titanium oxide is kept substantially the same, the color tone may slightly vary depending on layer formation conditions and the like. To develop a yellowish color, the average thickness of the optical functional layer 12 containing titanium oxide is preferably controlled within the range of from 80 nm or more to less than 115 nm. To develop a reddish color, the average thickness of the optical functional layer 12 containing titanium oxide is preferably controlled within the range of from 115 nm or more to less than 150 nm. To develop a bluish color, the average thickness of the optical functional layer 12 containing titanium oxide is preferably controlled within the range of from 150 nm to 165 nm. To develop a greenish color, the average thickness of the optical functional layer 12 containing titanium oxide is preferably controlled within the range of from more than 165 nm to 185 nm or less. To obtain the blue or green glitter substrate 10, the average thickness of the optical functional layer 12 containing titanium oxide is preferably controlled within the range of from 150 nm to 185 nm, particularly within the range of from 155 nm to 180 nm.

A known method may be utilized as a method of forming the optical functional layer 12 on at least a portion of the surface of the flaky substrate 11. For example, the formation of the optical functional layer 12 containing titanium oxide on at least a portion of the surface of the flaky substrate 11 may be performed with reference to a method disclosed in JP 2001-31421 A or JP 2003-12962 A. According to the method disclosed in each of the above-mentioned publications, rutile-type titanium oxide precipitates on the surface of the flaky substrate 11 to form the optical functional layer 12 containing titanium oxide in a solution containing a titanium compound such as titanium tetrachloride. Rutile-type titanium oxide can be precipitated on the surface of the flaky substrate 11 by adding an alkaline compound or an alkaline solution to the solution containing the titanium compound at a temperature of from 55°C to 85°C and at a pH of 1.3 or less. The precipitation of rutile-type titanium oxide is promoted when tin or a tin compound is caused to adhere to the flaky substrate 11 in advance. The use of the method enables the formation of the optical functional layer 12 containing rutile-type titanium oxide on the surface of the flaky substrate 11 without any need for heating for crystal transition.

Glass flakes each having formed on its surface the optical functional layer 12 containing rutile-type titanium oxide are sold as the METASHINE (trademark) titania coat series by Nippon Sheet Glass Co., Ltd. Such commercial product may be used as the glitter substrate 10.

### (First Layer)

In the glitter pigment 100, the first layer 21 covers at least a portion of the surface of the glitter substrate 10. The first layer 21 may cover the entire surface of the glitter substrate 10.

The content ratio of the first layer 21 relative to the mass of the glitter substrate 10 is preferably in the range of from 0.1 mass% to 1 mass%. When the content ratio of the first layer 21 is limited within the above-mentioned range, a reduction in glitter due to the aggregation of the particles of the glitter substrate 10 is suppressed. In this description, the content ratio of the first layer 21 relative to the mass of the glitter substrate 10 may be determined, for example, from a loading amount. The content ratio of the first layer 21 relative to the mass of the glitter substrate 10 may also be determined, for example, from a weight reduction rate when the glitter pigment 100 is dried under the conditions of 110°C and 2 hours, and is then heated under the conditions of 500°C and 1 hour.

The first layer 21 contains the silane coupling agent. The first layer 21 is a layer formed from a first surface treatment agent containing the silane coupling agent as an essential component. For example, a silane coupling agent containing at least one kind of functional group selected from the group consisting of: a vinyl group; an epoxy group; a styryl group; a methacrylic group; an acrylic group; an amino group; an isocyanate group; an isocyanurate group; a ureido group; a mercapto group; and an acid anhydride group may be used as the silane coupling agent. An alkyl-based silane coupling agent containing an alkyl group may be used as the silane coupling agent. Examples of the alkyl-based silane coupling agent containing an alkyl group may include diethoxydimethylsilane and methyltrimethoxysilane.

The first surface treatment agent may further contain a tetraalkoxysilane in addition to the silane coupling agent.

### (Second Layer)

The glitter pigment 100 may further include the second layer 22 containing silica as a main component. In this case, the second layer 22 covers at least a portion of the surface of the pigment composite 30. The second layer 22 may cover the entire surface of the pigment composite 30.

The second layer 22 may further cover at least a portion of the surface of the first layer 21. The second layer 22 may further cover the entire surface of the first layer 21.

As illustrated in FIG. 1B , the second layer 22 may cover the entire surface of the glitter substrate 10 having formed thereon the first layer 21, and the pigment composite 30 may be included in the second layer 22.

The content ratio of the second layer 22 relative to the mass of the glitter substrate 10 is preferably in the range of from 5 mass% to 10 mass%. When the content ratio of the second layer 22 is limited within the above-mentioned range, a reduction in glitter due to the aggregation of the particles of the glitter substrate 10 is suppressed. In this description, the content ratio of the second layer 22 relative to the mass of the glitter substrate 10 may be determined, for example, from a loading amount.

The second layer 22 contains silica as a main component. The second layer 22 may be formed only of silica. To adjust the refractive index of the second layer 22 and/or impart alkali resistance to the second layer 22, the second layer 22 may further contain metal oxides selected from the group consisting of: titanium oxide (titania); zirconium oxide (zirconia); and aluminum oxide (alumina) alone or in combination thereof.

The second layer 22 is a layer formed from a second surface treatment agent. The second surface treatment agent contains a hydrolyzable compound containing a silicon atom or a hydrolyzate of the above-mentioned compound. Examples of the hydrolyzable compound containing a silicon atom include: tetraalkoxysilanes, such as tetramethoxysilane, tetraethoxysilane, tetrapropoxysilane, and tetrabutoxysilane; and methyltrialkoxysilanes, such as methyltrimethoxysilane, methyltriethoxysilane, methyltripropoxysilane, and methyltributoxysilane. A tetraalkoxysilane in which an alkoxy group has 3 or less carbon atoms is suitably used because the tetraalkoxysilane easily forms the second layer 22 that is dense.

The second surface treatment agent may contain a hydrolyzable compound containing at least one kind of metal atom selected from the group consisting of: titanium; zirconium; and aluminum together with the hydrolyzable compound containing a silicon atom.

The second surface treatment agent may contain only a silicon atom as a metal atom. In this description, a silicon atom is regarded as one kind of metal atom.

### (Organic Pigment)

The organic pigment 31 may have an average particle size of from 10 nm to 1 µm. When the average particle size of the organic pigment 31 is 10 nm or more, the durability of the organic pigment 31 is improved. When the average particle size of the organic pigment 31 is 1 µm or less, the glitter of the glitter substrate 10 is maintained because the hiding of the glitter substrate 10 by the organic pigment 31 is suppressed. As a result, for example, a reduction in color tone in the glitter pigment 100 is suppressed.

Examples of the organic pigment 31 include phthalocyanine pigments, insoluble azo pigments, azo lake pigments, isoindolinone pigments, quinophthalone pigments, lactone pigments, anthraquinone pigments, quinacridone pigments, dioxazine pigments, diketopyrrolopyrrole pigments, anthrapyridine pigments, anthanthrone pigments, indanthrone pigments, flavanthrone pigments, perinone pigments, perylene pigments, indigo pigments, and thioindigo pigments.

When the glitter pigment 100 is required to have weather resistance, for example, when the glitter pigment 100 is used for an automotive paint, pigments, such as copper phthalocyanine pigments, halogenated copper phthalocyanine pigments, insoluble azo pigments, isoindolinone pigments, quinacridone pigments, diketopyrrolopyrrole pigments, indanthrone pigments, and perylene pigments, are each preferably used as the organic pigment 31.

When the glitter pigment 100 is used for a cosmetic, examples of a red pigment serving as the organic pigment 31 may include Red Nos. 2, 3, 102, 104, 105, 106, 201, 202, 203, 204, 205, 206, 207, 208, 213, 214, 215, 218, 219, 220, 221, 223, 225, 226, 227, 228, 230(1), 230(2), 231, 232, and 405. Examples of a yellow pigment may include Yellow Nos. 4, 5, 201, 202(1), 202(2), 203, 204, 205, 401, 402, 403, 404, 405, 406, and 407. Examples of a green pigment may include Green Nos. 3, 201, 202, 204, 205, 401, and 402. Examples of a blue pigment may include Blue Nos. 1, 2, 201, 202, 203, 204, 205, 403, and 404. Examples of an orange pigment may include Orange Nos. 201, 203, 204, 205, 206, 207, 401, 402, and 403. In addition to the foregoing, examples of the organic pigment may include Brown No. 201, Violet Nos. 201 and 401, and Black No. 401.

A chroma can be improved by a synergistic effect between the interference color of the optical functional layer 12 and the color of the organic pigment 31 through the selection of the organic pigment 31 exhibiting a color close to the interference color of the optical functional layer 12.

### (Resin)

In the pigment composite 30, at least a portion of the surface of the organic pigment 31 is coated with the resin 32. The entire surface of the organic pigment 31 may be coated with the resin 32.

The resin 32 may have a non-polar part and a polar part. The entire surface of the organic pigment 31 is easily coated with such resin 32 because the resin 32 easily adsorbs to the surface of the organic pigment 31. In addition, such resin 32 is easily dispersed in an aqueous medium. Accordingly, as described in a method of producing the glitter pigment 100 to be described later, the second layer 22 containing silica as a main component is easily formed on the surface of the organic pigment 31 coated with the resin 32 (pigment composite 30).

The resin 32 may contain a cationic group or may contain an anionic group. Examples of the resin containing a cationic group include cationic group-containing organic polymer compounds each obtained by copolymerizing a cationic group-containing monomer containing an amino group, a quaternary ammonium salt group, or the like with any other monomer copolymerizable with such cationic group-containing monomer. Examples of the resin containing an anionic group include anionic group-containing organic polymer compounds each obtained by copolymerizing an anionic group-containing monomer containing a carboxyl group, a sulfone group, a phosphone group, a thiocarboxyl group, or the like with any other monomer copolymerizable with such anionic group-containing monomer. An anionic group-containing organic polymer compound containing a carboxyl group or a sulfo group is preferred in consideration of the availability of raw material monomers, price, and the like, and an anionic group-containing organic polymer compound containing a carboxyl group is particularly preferred because the coexistence range of an electrically neutral state and an anionic state can be widely controlled.

Examples of the carboxyl group-containing monomer that may be used for the synthesis of the anionic group-containing organic polymer compound include: unsaturated carboxylic acids, such as acrylic acid, methacrylic acid, maleic acid, maleic anhydride, fumaric acid, crotonic acid, itaconic acid, and 4-vinylbenzoic acid; and polybasic acid unsaturated esters, such as vinyl succinate, allyl maleate, vinyl terephthalate, and allyl trimellitate. In addition, examples of the sulfonic acid group-containing monomer include: unsaturated carboxylic acid sulfo-substituted alkyl or aryl esters, such as 2-sulfoethyl acrylate and 4-sulfophenyl methacrylate; sulfocarboxylic acid unsaturated esters such as vinyl sulfosuccinate; and sulfostyrenes such as styrene-4-sulfonic acid.

Examples of the other monomer copolymerizable with the anionic group-containing monomer that may be used for the synthesis of the anionic group-containing organic polymer compound include: unsaturated fatty acid esters, such as methyl acrylate, ethyl acrylate, n-propyl acrylate, isopropyl acrylate, n-butyl acrylate, isobutyl acrylate, t-butyl acrylate, 2-ethylhexyl acrylate, n-octyl acrylate, dodecyl acrylate, octadecyl acrylate, cyclohexyl acrylate, isobornyl acrylate, benzyl acrylate, 2,3-epoxypropyl acrylate, 2,3-epoxybutyl acrylate, 2,3-epoxycyclohexyl acrylate, vinyl acrylate, methyl methacrylate, ethyl methacrylate, n-propyl methacrylate, isopropyl methacrylate, n-butyl methacrylate, isobutyl methacrylate, t-butyl methacrylate, 2-ethylhexyl methacrylate, n-octyl methacrylate, dodecyl methacrylate, octadecyl methacrylate, cyclohexyl methacrylate, isobornyl methacrylate, benzyl methacrylate, 2,3-epoxypropyl methacrylate, 2,3-epoxybutyl methacrylate, 2,3-epoxycyclohexyl methacrylate, vinyl methacrylate, dimethyl maleate, diethyl maleate, dimethyl fumarate, diethyl fumarate, ethyl itaconate, benzyl itaconate, 2-hydroxyethyl acrylate, 2-hydroxypropyl acrylate, 2-hydroxyethyl methacrylate, 2-hydroxypropyl methacrylate, 2-aminoethyl acrylate, 2-aminopropyl acrylate, 3-aminopropyl acrylate, 2-(methylamino)ethyl acrylate, 2-(methylamino)propyl acrylate, 2-(ethylamino)ethyl acrylate, 2-(ethylamino)propyl acrylate, 2-(dimethylamino)ethyl acrylate, and 3-(dimethylamino)propyl acrylate; unsaturated fatty acid amides, such as acrylamide, N-methylacrylamide, N-ethylacrylamide, N-propylacrylamide, N-dimethylacrylamide, N-diethylacrylamide, N-dipropylacrylamide, N-(2-aminoethyl)acrylamide, N-(2-aminopropyl)acrylamide, N-(3-aminopropyl)acrylamide, N-[2-(methylamino)ethyl]acrylamide, N-[2-(methylamino)propyl]acrylamide, N-[3-(methylamino)propyl]acrylamide, N-[2-(dimethylamino)ethyl]acrylamide, N-[2-(dimethylamino)propyl]acrylamide, N-[3-(dimethylamino)propyl]acrylamide, methacrylamide, N-methylmethacrylamide, N-ethylmethacrylamide, N-propylmethacrylamide, N-dimethylmethacrylamide, N-diethylmethacrylamide, N-dipropylmethacrylamide, N-(2-aminoethyl)methacrylamide, N-(2-aminopropyl)methacrylamide, N-(3-aminopropyl)methacrylamide, N-[2-(methylamino)ethyl]methacrylamide, N-[2-(methylamino)propyl]methacrylamide, N-[3-(methylamino)propyl]methacrylamide, N-[2-(dimethylamino)ethyl]methacrylamide, N-[2-(dimethylamino)propyl]methacrylamide, N-[3-(dimethylamino)propyl]methacrylamide, maleamide, N,N-dimethylmaleamide, fumaramide, and N,N-dimethylfumaramide; unsaturated nitriles, such as acrylonitrile and methacrylonitrile; carboxylic acid unsaturated esters, such as vinyl acetate, vinyl propionate, vinyl butanoate, vinyl hexanoate, vinyl 2-ethylhexanoate, vinyl octadecanoate, vinyl benzoate, allyl acetate, allyl propionate, allyl hexanoate, and allyl decanoate; unsaturated ethers, such as ethyl vinyl ether and butyl vinyl ether; styrenes, such as styrene, α-methylstyrene, o-methylstyrene, m-methylstyrene, p-methylstyrene, p-t-butylstyrene, 4-methoxystyrene, and 4-chlorostyrene; unsaturated hydrocarbons, such as ethylene, propylene, 1-butene, 1-octene, vinylcyclohexane, and 4-vinylcyclohexene; unsaturated halogenated hydrocarbons, such as vinyl chloride, vinylidene chloride, tetrafluoroethylene, and 3-chloropropylene; vinyl-substituted heterocyclic compounds, such as 4-vinylpyridine, N-vinylcarbazole, and N-vinylpyrrolidone; reaction products of monomers each containing a substituent having active hydrogen, such as a carboxyl group, a hydroxy group, or an amino group, in the monomers listed above with epoxides, such as ethylene oxide, propylene oxide, and cyclohexene oxide; and reaction products of monomers each containing a substituent having a hydroxy group, an amino group, or the like in the monomers listed above with carboxylic acids, such as acetic acid, propionic acid, butanoic acid, hexanoic acid, decanoic acid, and dodecanoic acid.

For example, a styrene-acrylic acid copolymer is suitably used as the anionic group-containing organic polymer compound. In the styrene-acrylic acid copolymer, in addition to a styrene-based monomer, an acrylic acid monomer, and a methacrylic acid monomer, a known monomer copolymerizable with these monomers may be copolymerized. Examples of such monomer include: acrylic acid esters and methacrylic acid esters, such as methyl acrylate, methyl methacrylate, n-propyl acrylate, isopropyl acrylate, n-butyl acrylate, sec-butyl acrylate, tert-butyl acrylate, 2-ethylbutyl acrylate, 1,3-dimethylbutyl acrylate, hexyl acrylate, 2-ethylhexyl acrylate, octyl acrylate, ethyl methacrylate, n-butyl methacrylate, 2-methylbutyl methacrylate, pentyl methacrylate, heptyl methacrylate, and nonyl methacrylate; acrylic acid ester derivatives and methacrylic acid ester derivatives, such as 3-ethoxypropyl acrylate, 3-ethoxybutyl acrylate, dimethylaminoethyl acrylate, 2-hydroxyethyl acrylate, 2-hydroxybutyl acrylate, ethyl-α-(hydroxymethyl) acrylate, dimethylaminoethyl methacrylate, hydroxyethyl methacrylate, and hydroxypropyl methacrylate; acrylic acid aryl esters and acrylic acid aralkyl esters, such as phenyl acrylate, benzyl acrylate, phenylethyl acrylate, and phenylethyl methacrylate; monoacrylic acid esters or monomethacrylic acid esters of polyhydric alcohols, such as diethylene glycol, triethylene glycol, polyethylene glycol, glycerin, and bisphenol A; maleic acid dialkyl esters, such as dimethyl maleate and diethyl maleate; and vinyl acetate. One or two or more kinds of those monomers may each be added as a monomer component.

The anionic group-containing organic polymer compound may be synthesized by any one of various known reaction methods, such as bulk polymerization, solution polymerization, suspension polymerization, and emulsion polymerization. Examples of a polymerization catalyst used for the synthesis of, for example, the styrene-acrylic acid copolymer include 2,2'-azobis(2,4-dimethylvaleronitrile), 2,2'-azobisisobutyronitrile, 1,1'-azobis(cyclohexane-1-carbonitrile), benzoyl peroxide, dibutyl peroxide, and butyl peroxybenzoate.

The styrene-acrylic acid copolymer may be a random copolymer or a graft copolymer. As an example of the graft copolymer, there may be given a graft copolymer in which a copolymer of polystyrene or a nonionic monomer copolymerizable with styrene and styrene serves as a backbone or a branch, and a copolymer of acrylic acid or methacrylic acid and any other monomer containing styrene serves as a branch or a backbone. The styrene-acrylic acid copolymer may be a mixture of the graft copolymer and the random copolymer.

The content ratio of the organic pigment 31 in the pigment composite 30 is preferably larger than the content ratio of the resin 32. A ratio between the content ratio of the organic pigment 31 and the content ratio of the resin 32 may be, for example, in the range of from 60 mass%:40 mass% to 90 mass%:10 mass%. The ratio between the content ratio of the organic pigment 31 and the content ratio of the resin 32 is preferably 80 mass%:20 mass%. In this description, the content ratio of the organic pigment 31 and the content ratio of the resin 32 in the pigment composite 30 may each be determined, for example, from a loading amount.

The content ratio of the pigment composite 30 relative to the mass of the glitter substrate 10 may be in the range of from 0.1 mass% to 15 mass%. Further, the content ratio may be in the range of from 0.5 mass% to 10 mass%. More specifically, the content ratio of the pigment composite 30 relative to the mass of the glitter substrate 10 is preferably in the range of from 0.1 mass% to 5 mass%, and is more preferably in the range of from 0.5 mass% to 2 mass%. When the content ratio of the pigment composite 30 is kept within the above-mentioned ranges, a reduction in reflection on the surface of the glitter substrate 10 due to absorption by the organic pigment 31 is suppressed. Thus, a reduction in glitter in the glitter pigment 100 is suppressed. In this description, the content ratio of the pigment composite 30 relative to the mass of the glitter substrate 10 may be determined, for example, from a loading amount.

For example, the pigment composite 30 may be produced by a method described below. First, a mixture containing the organic pigment 31 and the resin 32 is dispersed in an aqueous medium to provide an aqueous dispersion for pigments. The resin 32 is arranged on at least a portion of the surface of the organic pigment 31 in the aqueous dispersion for pigments. That is, the pigment composite 30 is formed in the aqueous dispersion for pigments. The resin 32 may be arranged so as to coat the entire surface of the organic pigment 31.

The above-mentioned aqueous medium is a solvent in which the resin 32 can be dispersed. Examples of the above-mentioned aqueous medium include water, an organic solvent miscible with water, and a mixture of an organic solvent miscible with water and water. Examples of the organic solvent miscible with water include: alcohols, such as methanol, ethanol, n-propanol, and isopropanol; ketones, such as acetone and methyl ethyl ketone; polyalkylene glycols, such as ethylene glycol, diethylene glycol, and propylene glycol; alkyl ethers of polyalkylene glycols; and lactams such as N-methyl-2-pyrrolidone. In consideration of safety and an environmental load, only water or a mixture of an organic solvent miscible with water and water is preferably used as the above-mentioned aqueous medium, and only water is particularly preferably used.

When the resin 32 is an anionic group-containing organic polymer compound, the weight average molecular weight of the anionic group-containing organic polymer compound is preferably in the range of from 2,000 to 100,000, and is more preferably in the range of from 5,000 to 50,000. When the weight average molecular weight is 2,000 or more, the following tendency is observed: the dispersion stability of the aqueous dispersion for pigments itself is improved, and hence sedimentation due to the aggregation or the like of the organic pigment 31 in the aqueous dispersion for pigments hardly occurs. When the weight average molecular weight is 100,000 or less, an increase in viscosity of the aqueous dispersion for pigments is suppressed, and hence the dispersibility thereof tends to increase. In this description, the weight average molecular weight is a value measured by a gel permeation chromatography (GPC) method, and is a value converted to the molecular weight of polystyrene used as a standard substance.

When a styrene-acrylic acid copolymer is used as the resin 32, the weight average molecular weight of the styrene-acrylic acid copolymer is preferably in the range of from 5,000 to 20,000, is more preferably in the range of from 5,000 to 18,000, and is still more preferably in the range of from 5,500 to 15,000.

When the resin 32 is an anionic group-containing organic polymer compound, the acid value of the anionic group-containing organic polymer compound is preferably in the range of from 30 mgKOH/g to 220 mgKOH/g. When the acid value is 30 mgKOH/g or more, sufficient hydrophilicity is ensured, and hence the dispersion stability of the organic pigment 31 in the aqueous dispersion for pigments tends to become satisfactory. When the acid value is 220 mgKOH/g or less, the aggregation of the molecules of the organic pigment 31 in the aqueous dispersion for pigments tends to be more difficult to occur. In this description, the acid value is a numerical value measured in accordance with the Japanese Industrial Standard "JIS K 0070:1992 Test methods for acid value, saponification value, ester value, iodine value, hydroxyl value and unsaponifiable matter of chemical products," and is the amount (mg) of potassium hydroxide required to completely neutralize 1 g of the resin.

When a styrene-acrylic acid copolymer is used as the resin 32, the styrene-acrylic acid copolymer has a carboxyl group derived from an acrylic acid monomer and a methacrylic acid monomer, and its acid value is preferably in the range of from 120 mgKOH/g to 220 mgKOH/g, and is more preferably in the range of from 150 mgKOH/g to 200 mgKOH/g.

When the resin 32 is an anionic group-containing organic polymer compound, the glass transition point of the anionic group-containing organic polymer compound is preferably in the range of from -20°C to 100°C. When the glass transition point is within the above-mentioned range, the rub resistance and the like of the pigment composite 30 can be improved.

In the aqueous dispersion for pigments, to develop dispersibility and dispersion stability, the anionic group-containing organic polymer compound serving as the resin 32 preferably takes a form in which at least some of its anionic groups are ionized by a basic substance. The optimum ratio of the ionized groups out of the anionic groups is not uniquely limited because the ratio varies depending on the composition, molecular weight, acid value, and the like of the anionic group-containing organic polymer compound to be used. However, the ratio only needs to be within a range in which desired dispersibility and desired dispersion stability are developed, and usually, the ratio is preferably set in the range of from 30% to 100%, particularly in the range of from 70% to 100%. The ratio of the ionized groups does not mean the molar ratio of the anionic groups and the basic substance, but takes dissociation equilibrium into consideration. For example, in the case where the anionic group is a carboxyl group, even when a stoichiometrically equivalent amount of a strong basic substance is used, the ratio of the ionized groups is less than 100% owing to the dissociation equilibrium, and the neutralized anionic group of the anionic group-containing organic polymer compound is in a mixed state of a carboxylate group and a carboxyl group.

Examples of the basic substance used to neutralize and ionize at least some of the anionic groups of the anionic group-containing organic polymer compound include known and commonly used substances, and for example, compounds selected from the group consisting of: ammonia; primary, secondary, or tertiary organic amines (including basic nitrogen-containing heterocyclic compounds); and alkali metal hydroxides are suitably given. The counterion of the carboxylate group is turned into a cation selected from the group consisting of: an ammonium ion (including a protonated cation of a basic nitrogen-containing heterocyclic compound); and an alkali metal ion by ionizing at least some of the anionic groups with those suitable basic substances listed as examples.

The ratio of the resin 32 to the organic pigment 31 in the aqueous dispersion for pigments is preferably from 10 parts to 200 parts relative to 100 parts in terms of mass. When the ratio of the resin 32 is too low, the rub resistance of the pigment composite 30 tends to reduce, and when the ratio of the resin 32 is too high, the viscosity of the dispersion tends to become higher.

### [Method of producing Glitter Pigment]

Next, a method of producing the glitter pigment 100 of this embodiment described above is described.

The method of producing the glitter pigment 100 in this embodiment includes: treating the surface of the glitter substrate 10 with a first surface treatment agent containing a silane coupling agent to form the first layer 21 containing the silane coupling agent on at least a portion of the surface of the glitter substrate 10 (Step S1); and preparing an aqueous dispersion, which contains the pigment composite 30 containing the organic pigment 31 and the resin 32 coated on at least a portion of the surface of the organic pigment 31, and the glitter substrate 10 having formed thereon the first layer 21, followed by the adhesion of the pigment composite 30 to the surface of the first layer 21 (Step S2).

When the glitter substrate 10 includes the flaky substrate 11 and the optical functional layer 12 formed on at least a portion of the surface of the flaky substrate 11, the production method may include forming the optical functional layer 21 on at least a portion of the surface of the flaky substrate 11 before Step S1. A method of forming the optical functional layer 21 on at least a portion of the surface of the flaky substrate 11 is as described above.

In Step S1, the first layer 21 containing the silane coupling agent is formed on the surface of the glitter substrate 10 by treating the surface of the glitter substrate 10 with the first surface treatment agent. The first layer 21 is formed so as to cover at least a portion of the surface of the glitter substrate 10. The first layer 21 may be formed so as to cover the entire surface of the glitter substrate 10.

For example, in Step S1, the first surface treatment agent is obtained by: adding the silane coupling agent to pure water; and stirring the mixture at room temperature to hydrolyze the silane coupling agent. Next, the glitter substrate 10 is added to pure water, and the mixture is stirred. After that, the first surface treatment agent is added to the mixture, and the whole is further stirred. The resultant mixed liquid is filtered and then dried. Thus, the first layer 21 containing the silane coupling agent can be formed on at least a portion of the surface of the glitter substrate 10.

For convenience, in this embodiment, the above-mentioned aqueous dispersion containing the pigment composite 30 and the glitter substrate 10 having formed thereon the first layer 21 is referred to as "first aqueous dispersion." In Step S2, the first aqueous dispersion containing the pigment composite 30 and the glitter substrate 10 having formed thereon the first layer 21 is prepared, and the pigment composite 30 is caused to adhere to the surface of the first layer 21. Step S2 is performed, for example, by a sol-gel method.

Step S2 may include arranging the resin 32 on at least a portion of the surface of the organic pigment 31 to produce the pigment composite 30. A method of producing the pigment composite 30 is as described above.

In Step S2, the above-mentioned aqueous dispersion may further contain a second surface treatment agent containing a hydrolyzable compound containing a silicon atom or a hydrolyzate of the above-mentioned compound, and Step S2 may include causing the pigment composite 30 to adhere to the surface of the first layer 21, and forming the second layer 22 containing silica as a main component on at least a portion of the surface of the pigment composite 30, or on at least a portion of the surface of the pigment composite 30 and at least a portion of the surface of the first layer 21.

When the above-mentioned aqueous dispersion further contains the second surface treatment agent, the second layer 22 containing silica as a main component may be formed on at least a portion of the surface of the pigment composite 30, or on at least a portion of the surface of the pigment composite 30 and at least a portion of the surface of the first layer 21 by, for example, the hydrolysis and condensation polymerization of the hydrolyzable compound containing a silicon atom.

For convenience, in this embodiment, the above-mentioned aqueous dispersion further containing the second surface treatment agent is referred to as "second aqueous dispersion." The second aqueous dispersion may contain, for example, 0.1 mass% to 20 mass% of the hydrolyzable compound containing a silicon atom and 0.1 mass% to 5 mass% of the organic pigment 31. The second aqueous dispersion may further contain water for hydrolysis. For example, a mixing ratio (molar ratio) between a silicon alkoxide, which is a hydrolyzable compound containing a silicon atom, and water is suitably as follows: when the amount of the silicon alkoxide is defined as 1, the water is used in an amount of from 25 to 100. The content ratios of silica and the organic pigment 31 to be finally incorporated into the second layer 22 may be controlled by changing the content ratios of the hydrolyzable compound containing a silicon atom and the organic pigment 31.

The second aqueous dispersion may further contain a solvent. Organic solvents including: hydrocarbons, such as hexane, toluene, and cyclohexane; halogenated hydrocarbons, such as methyl chloride, carbon tetrachloride, and trichloroethylene; ketones, such as acetone and methyl ethyl ketone; nitrogen-containing compounds such as diethylamine; alcohols; and esters such as ethyl acetate may each be used as the solvent. Of those, an alcohol-based solvent is suitably used, and examples thereof include methyl alcohol, ethyl alcohol, 1-propyl alcohol, 2-propyl alcohol, butyl alcohol, and amyl alcohol. A chain saturated monohydric alcohol having 3 or less carbon atoms, such as methyl alcohol, ethyl alcohol, 1-propyl alcohol, or 2-propyl alcohol, is particularly suitably used because its evaporation rate at room temperature is high.

The second aqueous dispersion may further contain a catalyst. Alkali catalysts, such as ammonium hydroxide, ammonia, and sodium hydroxide, are each suitably used as the catalyst. In this case, the pH of the second aqueous dispersion is usually in the range of from 10 to 14.

For example, in Step S2, 1 mass% to 20 mass% of the glitter substrate 10 is dispersed in the second aqueous dispersion, and the resultant is stirred for from 2 hours to 3 hours so that the hydrolyzable compound containing a silicon atom may be subjected to hydrolysis and condensation polymerization. Thus, the second layer 22 including the pigment composite 30 can be formed on the surface of the glitter substrate 10. Subsequently, the resultant is washed with water and filtered, and is then dried. The drying is preferably performed at from 120°C to 180°C. The drying time may be appropriately set in accordance with the loading amount of the glitter substrate.

According to the method of producing the glitter pigment 100 of this embodiment, the glitter pigment 100 improved in pigment detachment-suppressing effect can be produced.

The glitter pigment 100 of this embodiment may be used, for example, for a paint composition. The glitter pigment 100 of this embodiment can improve the appearance of the paint composition to be obtained because the organic pigment 31 hardly detaches from the glitter pigment even when the glitter pigment is stirred with a paint for a long time.

### Examples

The present invention is described below in more detail by way of Examples. However, the present invention is not limited to the following Examples.

### [Example 1]

### <Glitter Substrate>

Glass flakes (ST1025RB manufactured by Nippon Sheet Glass Co., Ltd.) each covered with a rutile-type titanium oxide layer exhibiting a blue interference color were used as a glitter substrate. The glitter substrate had a thickness of 1.3 µm and an average particle size of 25 µm.

### <First Surface Treatment>

Diethoxydimethylsilane was used as a silane coupling agent. After 0.3 g of diethoxydimethylsilane was added to 20 mL of pure water, the mixture was stirred at room temperature for 30 minutes so that diethoxydimethylsilane was hydrolyzed. Thus, a first surface treatment agent was obtained. 30 g of the glitter substrate was added to 300 mL of pure water, and the mixture was stirred with a stirrer. After that, the first surface treatment agent was further added to the mixture, and the whole was stirred for 15 minutes. The resultant mixed liquid was filtered, and was then dried at 120°C for 4 hours. Thus, a first layer containing the silane coupling agent was formed on the surface of the glitter substrate.

### <Second Surface Treatment>

Tetraethoxysilane was used as a hydrolyzable compound containing a silicon atom. A second surface treatment agent was obtained by mixing 10 mL of tetraethoxysilane and 300 mL of isopropyl alcohol. 2 g of an aqueous pigment dispersion (FG CYAN 1SL manufactured by DIC Corporation, average particle size: about 100 nm, solid content concentration: 18%, weight ratio of blue pigment/resin: 80/20, blue pigment: phthalocyanine pigment, resin: styrene/acrylic-based copolymer) was added as a dispersion containing a pigment composite to the second surface treatment agent, and the materials were further mixed to provide a mixed liquid. The glitter substrate having formed thereon the first layer was added to the mixed liquid, and 10 mL of an ammonium hydroxide solution (concentration: 25%) was further added to the mixture to provide an aqueous dispersion. The contents of the aqueous dispersion were subjected to a dehydration condensation reaction while being stirred and mixed for from 2 hours to 3 hours. Thus, the pigment composite adhered to the surface of the first layer in the aqueous dispersion. The pigment composite contained an organic pigment and the resin coated on the surface of the organic pigment. In the aqueous dispersion, it is presumed that a second layer containing silica as a main component was formed on the surface of the pigment composite, and at the same time, the pigment composite having formed thereon the second layer adhered to the first layer, and the second layer was further formed thereon. Thus, the pigment composite was caused to firmly adhere to the surface of the glitter substrate having formed thereon the first layer.

Subsequently, after the filtration and water washing of the aqueous dispersion were repeated several times, the aqueous dispersion was dried, and was finally subjected to heat treatment at 150°C for 2 hours. Thus, a glitter pigment of Example 1 was obtained. The glitter pigment of Example 1 exhibited a glossy blue color.

### [Example 2]

### <Glitter Substrate>

Glass flakes (ST1025RS manufactured by Nippon Sheet Glass Co., Ltd.) each covered with a rutile-type titanium oxide layer exhibiting a silver interference color were used as a glitter substrate. The glitter substrate had a thickness of 1.3 µm and an average particle size of 25 µm.

### <First Surface Treatment>

A first layer containing a silane coupling agent was formed on the surface of the glitter substrate by the same method as that in Example 1.

### <Second Surface Treatment>

The pigment composite was caused to firmly adhere to the surface of the glitter substrate having formed thereon the first layer by the same method as that in Example 1.

Subsequently, in the same manner as in Example 1, after the filtration and water washing of the aqueous dispersion were repeated several times, the aqueous dispersion was dried, and was finally subjected to heat treatment at 150°C for 2 hours. Thus, a glitter pigment of Example 2 was obtained. The glitter pigment of Example 2 exhibited a glossy blue color.

### [Example 3]

### <Glitter Substrate>

Glass flakes (ST1022RB manufactured by Nippon Sheet Glass Co., Ltd.) each covered with a rutile-type titanium oxide layer exhibiting a blue interference color were used as a glitter substrate. The glitter substrate had a thickness of 1.3 µm and an average particle size of 22 µm.

### <First Surface Treatment>

A first layer containing a silane coupling agent was formed on the surface of the glitter substrate by the same method as that in Example 1.

### <Second Surface Treatment>

The second surface treatment agent obtained in Example 1 was used as a second surface treatment agent. 2 g of an aqueous pigment dispersion (eXpand! Blue ST6001 manufactured by DIC Corporation, average particle size: about 80 nm, solid content concentration: 28 wt%, weight ratio of blue pigment/resin: 60/40, blue pigment: indanthrone pigment, resin: styrene/maleic anhydride copolymer, and others) was used as a dispersion containing a pigment composite to be added to the second surface treatment agent. The pigment composite was caused to firmly adhere to the surface of the glitter substrate having formed thereon the first layer by the same method as that in Example 1 except for the foregoing.

Subsequently, in the same manner as in Example 1, after the filtration and water washing of the aqueous dispersion were repeated several times, the aqueous dispersion was dried, and was finally subjected to heat treatment at 150°C for 2 hours. Thus, a glitter pigment of Example 3 was obtained. The glitter pigment of Example 3 exhibited a glossy blue color.

### [Example 4]

### <Glitter Substrate>

Glass flakes (ST1022RY manufactured by Nippon Sheet Glass Co., Ltd.) each covered with a rutile-type titanium oxide layer exhibiting a yellow interference color were used as a glitter substrate. The glitter substrate had a thickness of 1.3 µm and an average particle size of 22 µm.

### <First Surface Treatment>

A first layer containing a silane coupling agent was formed on the surface of the glitter substrate by the same method as that in Example 1.

### <Second Surface Treatment>

The second surface treatment agent obtained in Example 1 was used as a second surface treatment agent. 2 g of an aqueous pigment dispersion (eXpand! Ylw ST1018 manufactured by DIC Corporation, average particle size: about 70 nm, solid content concentration: 34 wt%, weight ratio of yellow pigment/resin: 50/50, yellow pigment: isoindolinone pigment, resin: styrene/maleic anhydride-based copolymer) was used as a dispersion containing a pigment composite to be added to the second surface treatment agent. The pigment composite was caused to firmly adhere to the surface of the glitter substrate having formed thereon the first layer by the same method as that in Example 1 except for the foregoing.

Subsequently, in the same manner as in Example 1, after the filtration and water washing of the aqueous dispersion were repeated several times, the aqueous dispersion was dried, and was finally subjected to heat treatment at 150°C for 2 hours. Thus, a glitter pigment of Example 4 was obtained. The glitter pigment of Example 4 exhibited a glossy yellow color.

### [Example 5]

### <Glitter Substrate>

Glass flakes (ST1022RR manufactured by Nippon Sheet Glass Co., Ltd.) each covered with a rutile-type titanium oxide layer exhibiting a red interference color were used as a glitter substrate. The glitter substrate had a thickness of 1.3 µm and an average particle size of 22 µm.

### <First Surface Treatment>

A first layer containing a silane coupling agent was formed on the surface of the glitter substrate by the same method as that in Example 1.

### <Second Surface Treatment>

The second surface treatment agent obtained in Example 1 was used as a second surface treatment agent. 2 g of an aqueous pigment dispersion (eXpand! Red EH3427 manufactured by DIC Corporation, average particle size: about 100 nm, solid content concentration: 28 wt%, weight ratio of red pigment/resin: 75/25, red pigment: perylene pigment, resin: styrene/acrylic acid-based copolymer) was used as a dispersion containing a pigment composite to be added to the second surface treatment agent. The pigment composite was caused to firmly adhere to the surface of the glitter substrate having formed thereon the first layer by the same method as that in Example 1 except for the foregoing.

Subsequently, in the same manner as in Example 1, after the filtration and water washing of the aqueous dispersion were repeated several times, the aqueous dispersion was dried, and was finally subjected to heat treatment at 150°C for 2 hours. Thus, a glitter pigment of Example 5 was obtained. The glitter pigment of Example 5 exhibited a glossy red color.

### [Comparative Example 1]

### <Glitter Substrate>

Glass flakes (ST1025RB manufactured by Nippon Sheet Glass Co., Ltd.) each covered with a rutile-type titanium oxide layer exhibiting a blue interference color were used as a glitter substrate similarly to Example 1.

### <First Surface Treatment>

A first layer containing a silane coupling agent was formed on the surface of the glitter substrate by the same method as that in Example 1.

### <Second Surface Treatment>

Tetraethoxysilane was used as a hydrolyzable compound containing a silicon atom. A second surface treatment agent was obtained by mixing 10 mL of tetraethoxysilane and 300 mL of isopropyl alcohol. 0.75 g of a solution containing 40 mass% of fine particles (average particle size: 40 nm) of a blue organic pigment (EMF BLUE HG manufactured by Toyo Ink Co., Ltd.) was further added to the second surface treatment agent, and the materials were mixed to provide a mixed liquid. The glitter substrate having formed thereon the first layer was added to the mixed liquid, and 10 mL of an ammonium hydroxide solution (concentration: 25%) was further added to the mixture to provide an aqueous dispersion. The contents of the aqueous dispersion were subjected to a dehydration condensation reaction while being stirred and mixed for from 2 hours to 3 hours. Thus, the fine particles of the organic pigment adhered to the surface of the first layer in the aqueous dispersion. Thus, the fine particles of the organic pigment were caused to adhere to the surface of the glitter substrate having formed thereon the first layer.

Subsequently, in the same manner as in Example 1, after the filtration and water washing of the aqueous dispersion were repeated several times, the aqueous dispersion was dried, and was finally subjected to heat treatment at 150°C for 2 hours. Thus, a glitter pigment of Comparative Example 1 was obtained. The glitter pigment of Comparative Example 1 exhibited a glossy blue color.

### [Comparative Example 2]

### <Glitter Substrate>

Glass flakes (ST1025RB manufactured by Nippon Sheet Glass Co., Ltd.) each covered with a rutile-type titanium oxide layer exhibiting a blue interference color were used as a glitter substrate similarly to Example 1. In Comparative Example 2, the first surface treatment was not performed. That is, the first layer was not formed on the surface of the glitter substrate.

### <Second Surface Treatment>

An organic pigment composition was caused to adhere to the surface of the glitter substrate on which the first layer was not formed by the same method as that in Example 1.

Subsequently, in the same manner as in Example 1, after the filtration and water washing of the aqueous dispersion were repeated several times, the aqueous dispersion was dried, and was finally subjected to heat treatment at 150°C for 2 hours. Thus, a glitter pigment of Comparative Example 2 was obtained. The glitter pigment of Comparative Example 2 exhibited a glossy blue color.

### [Comparative Example 3]

### <Glitter Substrate>

Glass flakes (ST1022RB manufactured by Nippon Sheet Glass Co., Ltd.) each covered with a rutile-type titanium oxide layer exhibiting a blue interference color were used as a glitter substrate. In Comparative Example 3, the first surface treatment was not performed. That is, the first layer was not formed on the surface of the glitter substrate.

### <Second Surface Treatment>

An organic pigment composition was caused to adhere to the surface of the glitter substrate on which the first layer was not formed by the same method as that in Example 3.

Subsequently, in the same manner as in Example 1, after the filtration and water washing of the aqueous dispersion were repeated several times, the aqueous dispersion was dried, and was finally subjected to heat treatment at 150°C for 2 hours. Thus, a glitter pigment of Comparative Example 3 was obtained. The glitter pigment of Comparative Example 3 exhibited a glossy blue color.

### [Comparative Example 4]

### <Glitter Substrate>

Glass flakes (ST1022RY manufactured by Nippon Sheet Glass Co., Ltd.) each covered with a rutile-type titanium oxide layer exhibiting a yellow interference color were used as a glitter substrate. In Comparative Example 4, the first surface treatment was not performed. That is, the first layer was not formed on the surface of the glitter substrate.

### <Second Surface Treatment>

An organic pigment composition was caused to adhere to the surface of the glitter substrate on which the first layer was not formed by the same method as that in Example 4.

Subsequently, in the same manner as in Example 1, after the filtration and water washing of the aqueous dispersion were repeated several times, the aqueous dispersion was dried, and was finally subjected to heat treatment at 150°C for 2 hours. Thus, a glitter pigment of Comparative Example 4 was obtained. The glitter pigment of Comparative Example 4 exhibited a glossy yellow color.

### [Comparative Example 5]

### <Glitter Substrate>

Glass flakes (ST1022RR manufactured by Nippon Sheet Glass Co., Ltd.) each covered with a rutile-type titanium oxide layer exhibiting a red interference color were used as a glitter substrate. In Comparative Example 5, the first surface treatment was not performed. That is, the first layer was not formed on the surface of the glitter substrate.

### <Second Surface Treatment>

An organic pigment composition was caused to adhere to the surface of the glitter substrate on which the first layer was not formed by the same method as that in Example 5.

Subsequently, in the same manner as in Example 1, after the filtration and water washing of the aqueous dispersion were repeated several times, the aqueous dispersion was dried, and was finally subjected to heat treatment at 150°C for 2 hours. Thus, a glitter pigment of Comparative Example 5 was obtained. The glitter pigment of Comparative Example 5 exhibited a glossy red color.

### [Reference Example 1]

The glass flakes (ST1025RB manufactured by Nippon Sheet Glass Co., Ltd.) each covered with a rutile-type titanium oxide layer exhibiting a blue interference color, the glass flakes being used as the glitter substrate in each of Examples 1 and 2, were designated as Reference Example 1.

### [Reference Example 3]

The glass flakes (ST1022RB manufactured by Nippon Sheet Glass Co., Ltd.) each covered with a rutile-type titanium oxide layer exhibiting a blue interference color, the glass flakes being used as the glitter substrate in Example 3, were designated as Reference Example 3.

### [Reference Example 4]

The glass flakes (ST1022RY manufactured by Nippon Sheet Glass Co., Ltd.) each covered with a rutile-type titanium oxide layer exhibiting a yellow interference color, the glass flakes being used as the glitter substrate in Example 4, were designated as Reference Example 4.

### [Reference Example 5]

The glass flakes (ST1022RR manufactured by Nippon Sheet Glass Co., Ltd.) each covered with a rutile-type titanium oxide layer exhibiting a red interference color, the glass flakes being used as the glitter substrate in Example 5, were designated as Reference Example 5.

### <Detachment Evaluation>

Each glitter pigment thus obtained was evaluated for the detachment of the organic pigment by the following method. 1 g of the glitter pigment and 20 mL of isopropyl alcohol were placed in a glass bottle having a volume of 50 mL. A stirring bar was placed in the glass bottle, and the mixture was stirred with a magnetic stirrer at 600 rpm for 24 hours. After the stirring was stopped, the mixture was left to stand for 1 hour so that the glitter pigment was settled, followed by the removal of a supernatant liquid. The light transmittances (%) of the supernatant liquid at wavelengths of 480 nm, 580 nm, and 680 nm were measured with an ultraviolet-visible near-infrared spectrophotometer (UV-3600 manufactured by Shimadzu Corporation). A cell having a width of 10 mm was used for the measurement. The results are shown in Table 1 to Table 4.

### <Colorimetry>

Each glitter pigment thus obtained was subjected to colorimetry, that is, evaluated for its glitter and graininess by the following method. After 1 g of the glitter pigment was added to 9 g of an acrylic lacquer (Acrylic Super Clear manufactured by Nippon Paint Co., Ltd.), the materials were sufficiently mixed, and the mixture was applied onto hiding power test charts with a black background and a white background at thicknesses of 9 mils (9/1000 inch) each to produce a sample with a black background and a sample with a white background. After that, both the samples were naturally dried at room temperature. A sample with a black background and a sample with a white background were produced by the same method also for each reference example. The chromas (C*) of both the samples at 15° (highlight), 45°, and 75° (shade) were measured in a CIE 1976 (L*a*b*) color system with a multi-angle colorimeter (BYK-mac manufactured by BYK-Gardner GmbH). The results are shown in Table 1 to Table 4.

**[Table 1]**

| | | | Reference Example 1 | Example 1 | Example 2 | Comparative Example 1 | Comparative Example 2 |
|---|---|---|---|---|---|---|---|
| Interference color of glitter substrate | | | Blue | Blue | Silver | Blue | Blue |
| Average particle size of glitter substrate (µm) | | | 25 | 25 | 25 | 25 | 25 |
| First surface treatment (first layer) | | | - | Present | Present | Present | Absent |
| Adhesion of organic pigment | | | Absent | Present Present | | Present | Present |
| Transmittance (%) | Wavelength | 480 nm | - | 69.5 | 69.0 | 0.05 | 12.1 |
| | | 580 nm | - | 71.1 | 70.5 | 0.02 | 9.4 |
| | | 680 nm | - | 70.7 | 70.3 | 0.02 | 7.5 |
| Black background sample chroma (C*) | | 15° | 52.6 | 57.1 | 25.3 | 58.8 | 56.0 |
| | | 45° | 28.8 | 36.5 | 19.9 | 36.6 | 37.5 |
| | | 75° | 21.2 | 29.3 | 19.7 | 28.6 | 30.0 |
| White background sample chroma (C*) | | 15° | 28.1 | 59.8 | 32.3 | 57.6 | 57.2 |
| | | 45° | 10.0 | 45.8 | 35.7 | 34.6 | 42.6 |
| | | 75° | 16.4 | 42.7 | 38.9 | 30.3 | 39.5 |

**[Table 2]**

| | | | Reference Example 3 | Example 3 | Comparative Example 3 |
|---|---|---|---|---|---|
| Interference color of glitter substrate | | | Blue | Blue | Blue |
| Average particle size of glitter substrate (µm) | | | 22 | 22 | 22 |
| First surface treatment (first layer) | | | - | Present | Absent |
| Adhesion of organic pigment | | | Absent | Present | Present |
| Transmittance (%) | Wavelength | 480 nm | - | 68.6 | 28.0 |
| | | 580 nm | - | 58.6 | 11.7 |
| | | 680 nm | - | 51.4 | 12.5 |
| Black background sample chroma (C*) | | 15° | 50.0 | 49.5 | 49.2 |
| | | 45° | 24.5 | 31.3 | 33.9 |
| | | 75° | 19.5 | 27.8 | 29.1 |
| White background sample chroma (C*) | | 15° | 23.3 | 48.6 | 49.5 |
| | | 45° | 14.3 | 27.3 | 31.7 |
| | | 75° | 18.8 | 22.8 | 26.6 |

**[Table 3]**

| | | | Reference Example 4 | Example 4 | Comparative Example 4 |
|---|---|---|---|---|---|
| Interference color of glitter substrate | | | Yellow | Yellow | Yellow |
| Average particle size of glitter substrate (µm) | | | 22 | 22 | 22 |
| First surface treatment (first layer) | | | - | Present | Absent |
| Adhesion of organic pigment | | | Absent | Present | Present |
| Transmittance (%) | Wavelength | 480 nm | - | 96,7 | 51.9 |
| | | 580 nm | - | 97.1 | 58.2 |
| | | 680 nm 15° | - | 96.6 | 62.9 |
| Black background sample chroma (C*) | | | 21.6 | 38.1 | 37.7 |
| | | 45° | 11.7 | 30.9 | 30.6 |
| | | 75° | 7.6 | 29.1 | 29.1 |
| White background sample chroma (C*) | | 15° | 14.9 | 54.0 | 52.4 |
| | | 45° | 1.1 | 63.1 | 62.0 |
| | | 75° | 2.5 | 65.8 | 64.5 |

**[Table 4]**

| | | | Reference Example 5 | Example 5 | Comparative Example 5 |
|---|---|---|---|---|---|
| Interference color of glitter substrate | | | Red | Red | Red |
| Average particle size of glitter substrate (µm) | | | 22 | 22 | 22 |
| First surface treatment (first layer) | | | - | - Present | Absent |
| Adhesion of organic pigment | | | Absent | Present | Present |
| Transmittance (%) | Wavelength | 480 nm | - | 67.5 | 10.0 |
| | | 580 nm | - | 64.4 | 8.1 |
| | | 680 nm | - | 73.0 | 18.7 |
| Black background sample chroma (C*) | | 15° | 35.2 | 30.7 | 31.1 |
| | | 45° | 17.7 | 26.2 | 27.4 |
| | | 75° | 11.2 | 21.9 | 23.5 |
| White background sample chroma (C*) | | 15° | 16.1 | 40.9 | 41.0 |
| | | 45° | 9.4 | 46.6 | 46.7 |
| | | 75° | 10.5 | 46.2 | 45.7 |

### <Detachment Evaluation Results>

As can be seen from Table 1, in each of Examples 1 and 2, the transmittance exceeded 65% at any of wavelengths of 480 nm, 580 nm, and 680 nm. In contrast, in Comparative Example 1, the transmittance was 1% or less at any of wavelengths of 480 nm, 580 nm, and 680 nm, and the supernatant liquid was turbid. In Comparative Example 2, the transmittance was 15% or less at any of wavelengths of 480 nm, 580 nm, and 680 nm, and the supernatant liquid was turbid. When compared at each wavelength, the transmittance of Comparative Example 2 was lower than the transmittances of Examples 1 and 2 by 60 points or more.

As can be seen from Table 2, in Example 3, the transmittance exceeded 50% at any of wavelengths of 480 nm, 580 nm, and 680 nm. In contrast, in Comparative Example 3, the transmittance was 30% or less at any of wavelengths of 480 nm, 580 nm, and 680 nm. When compared at each wavelength, the transmittance of Comparative Example 3 was lower than the transmittance of Example 3 by 30 points or more.

As can be seen from Table 3, in Example 4, the transmittance exceeded 90% at any of wavelengths of 480 nm, 580 nm, and 680 nm. In contrast, in Comparative Example 4, the transmittance was 65% or less at any of wavelengths of 480 nm, 580 nm, and 680 nm. When compared at each wavelength, the transmittance of Comparative Example 4 was lower than the transmittance of Example 4 by 30 points or more.

As can be seen from Table 4, in Example 5, the transmittance exceeded 60% at any of wavelengths of 480 nm, 580 nm, and 680 nm. In contrast, in Comparative Example 5, the transmittance was 20% or less at any of wavelengths of 480 nm, 580 nm, and 680 nm. When compared at each wavelength, the transmittance of Comparative Example 5 was lower than the transmittance of Example 5 by 50 points or more.

The detachment evaluation results suggest that the organic pigments are less likely to undergo detachment in the glitter pigments of Examples 1 and 2 than in the glitter pigments of Comparative Examples 1 and 2. In addition, the results suggest that the organic pigments are less likely to undergo detachment in the glitter pigments of Examples 3 to 5 than in the glitter pigments of Comparative Examples 3 to 5, respectively. In each of the glitter pigments of Examples 1 and 2, the organic pigment was present under a state in which the resin was arranged on its surface (a state of a pigment composite). It is presumed that, as a result of the foregoing, as compared to the glitter pigment of Comparative Example 2 using the organic pigment having no resin on its surface, the pigment composite tended to be uniformly present near the surface of the first layer, and the pigment composite tended to adhere to the glitter substrate because of an interaction between the resin and the first layer. For the same reason, it is presumed that the pigment composite tended to be uniformly present near the surface of the first layer and the pigment composite tended to adhere to the glitter substrate in each of the glitter pigments of Examples 3 to 5 as compared to the glitter pigments of Comparative Examples 3 to 5, respectively. Further, in each of the glitter pigments of Examples 1 and 2, it is presumed that the organic pigment adhered more firmly to the glitter substrate than in the glitter pigment of Comparative Example 2 because the first layer contributed to an improvement in adhesion between the glitter substrate and the second layer. For the same reason, it is presumed that the organic pigment adhered more firmly to the glitter substrate in each of the glitter pigments of Examples 3 to 5 than in the glitter pigments of Comparative Examples 3 to 5, respectively.

### <Colorimetry Results>

As can be seen from Table 1, when the chroma (C*) of Reference Example 1 was compared to the chromas of Example 1, and Comparative Examples 1 and 2, in each of Example 1, and Comparative Examples 1 and 2, the chromas at 15°, 45°, and 75° were improved more than those of Reference Example 1 for both the black background sample and the white background sample because the blue organic pigment was caused to adhere. In the white background sample, the interference color of Reference Example 1 was not noticeable, and hence a difference between the chroma of Reference Example 1 and the chromas of Example 1, and Comparative Examples 1 and 2 became larger. Meanwhile, in Example 2, the glitter substrate exhibiting a silver interference color was used. Accordingly, in the black background sample, the silver color of the glitter substrate and the blue color of the organic pigment canceled each other out, and hence the chroma was lower than that of Reference Example 1. In the white background sample of Example 2, the chroma was higher than that of Reference Example 1 because of an effect of the blue organic pigment, but the chroma was lower than those of Example 1, and Comparative Examples 1 and 2 each using a glitter substrate exhibiting a blue interference color.

As can be seen from Table 2, when the chroma (C*) of Reference Example 3 was compared to the chromas of Example 3 and Comparative Example 3, in each of Example 3 and Comparative Example 3, the chromas of the black background sample at 45° and 75° were improved more than those of Reference Example 3 because the blue pigment was caused to adhere. The chroma of the black background sample at 15° was slightly lower than that of Reference Example 3, and hence an improvement in chroma comparable to that in Example 1 was not observed. In the white background sample, the interference color of Reference Example 3 was not noticeable, and hence a difference between the chroma of Reference Example 3 and the chromas of Example 3 and Comparative Example 3 became larger.

As can be seen from Table 3, when the chroma (C*) of Reference Example 4 was compared to the chromas of Example 4 and Comparative Example 4, in each of Example 4 and Comparative Example 4, the chromas at all of 15°, 45°, and 75° of the black background sample were improved more than those of Reference Example 4 because the yellow pigment was caused to adhere. In the white background sample, the interference color of Reference Example 4 was not noticeable, and hence a difference between the chroma of Reference Example 4 and the chromas of Example 4 and Comparative Example 4 became larger.

As can be seen from Table 4, when the chroma (C*) of Reference Example 5 was compared to the chromas of Example 5 and Comparative Example 5, in each of Example 5 and Comparative Example 5, the chromas at 45° and 75° of the black background sample were improved more than those of Reference Example 5 because the red pigment was caused to adhere. At 15° of the black background sample, the red interference color of the glitter substrate and the red color of the organic pigment canceled each other out, and hence the chroma was lower than that of Reference Example 5. In the white background sample, the interference color of Reference Example 5 was not noticeable, and hence a difference between the chroma of Reference Example 5 and the chromas of Example 5 and Comparative Example 5 became larger.

The colorimetry results suggest that when an organic pigment exhibiting a color close to the interference color of a glitter substrate is selected, a chroma tends to be improved by a synergistic effect between the interference color of the glitter substrate and the color of the organic pigment. However, it may be preferred to select a combination having a higher synergistic effect because there were cases where no improvement in chroma was observed or cases where a synergistic effect was difficult to obtain because the interference color of the glitter substrate and the color of the organic pigment canceled each other out.

In each of Examples described above, the glass flakes are used as the flaky substrate, but it is presumed that a pigment detachment-preventing effect is obtained even when, for example, mica pieces, synthetic mica pieces, silica flakes, alumina flakes, or graphite flakes except the glass flakes are used as the flaky substrate.

### Industrial Applicability

The glitter pigment of the present invention is applicable to various applications such as a paint composition because its pigment detachment-suppressing effect is improved.

## Claims

1. A glitter pigment, comprising:
a glitter substrate;
a first layer covering at least a portion of a surface of the glitter substrate and containing a silane coupling agent; and
a pigment composite adhering to a surface of the first layer, the pigment composite comprising an organic pigment and a resin coated on at least a portion of a surface of the organic pigment.

2. The glitter pigment according to claim 1, further comprising a second layer containing silica as a main component,
wherein the second layer covers at least a portion of a surface of the pigment composite.

3. The glitter pigment according to claim 2, wherein the second layer covers at least a portion of the surface of the first layer.

4. The glitter pigment according to claim 1,
wherein the glitter substrate comprises a flaky substrate and an optical functional layer formed on at least a portion of a surface of the flaky substrate, and
wherein the optical functional layer has at least one function selected from the group consisting of: light reflection; and coloring.

5. The glitter pigment according to claim 4, wherein the optical functional layer contains titanium oxide.

6. A method of producing a glitter pigment, the method comprising:
treating a surface of a glitter substrate with a first surface treatment agent containing a silane coupling agent to form a first layer containing the silane coupling agent on at least a portion of the surface; and
preparing an aqueous dispersion containing a pigment composite, which comprises an organic pigment and a resin coated on at least a portion of a surface of the organic pigment, and the glitter substrate having formed thereon the first layer, followed by adhesion of the pigment composite to a surface of the first layer.

7. The method of producing a glitter pigment according to claim 6,
wherein the aqueous dispersion further contains a second surface treatment agent containing a hydrolyzable compound containing a silicon atom or a hydrolyzate of the compound, and
wherein the method comprises causing the pigment composite to adhere to the surface of the first layer, and forming a second layer containing silica as a main component on at least a portion of the surface of the pigment composite, or on at least a portion of the surface of the pigment composite and at least a portion of the surface of the first layer.
